# EUROPEAN PATENT APPLICATION

(11) **EP 3 989 399 A1**
(43) Date of publication of application: **27.04.2022**
(21) Application number: 20203493.0
(22) Date of filing: 23.10.2020
(51) Int. Cl.: H02K 1/14, H02K 1/16

(54) **STATOR OR ROTOR SEGMENT COMPRISING COILS ON TEETH AND ADHESIVE ANCHOR OF OUTERMOST COIL EDGE**

(71) Applicant: Siemens Gamesa Renewable Energy A/S, 7330 Brande (DK)
(72) Inventor: Azar, Ziad, Sheffield, South Yorkshire S10 4ED (GB); Duke, Alexander, Sheffield S10 5SN (GB)
(74) Representative: Aspacher, Karl-Georg

(57) **Abstract**

A segment for the stator of an electric generator including at least one tooth, at least two slots, a coil winding (30,42,41), including at least two side coil portions (41) being housed in two end slots (17). Each end tooth comprises a end side surface (25a) extending in axial direction of the stator and facing an end slot. An adhesive layer (45) being provided between each side coil portion (41) and adjacent end side surface (25a) of an end tooth (15), such that the adhesive layer (45) extends in circumferential direction between the end side surface (25a) and the side coil portion (41). The end side surface (25a) comprising a plurality of surface irregularities (50), like grooves or protrusions, for enhancing the adherence of the adhesive layer (45) from the side coil portion (41) to the end side surface (25a) of the end tooth (15).

## Description

### Field of invention

The present invention relates to an electrical machine having a stator or a rotor with a segmented geometry, i.e. a stator or a rotor including a plurality of stator segments having respective coil windings and being circumferentially joined.

### Art Background

In large electrical machines, segmentation of the stator and/or the rotor structure is required to ease manufacturing and transportation. This is particularly required for stators or rotors where a coil winding is provided.

In some applications (for example in distributed winding generators) the circumferential ends of each stator segment can be designed with a half tooth, thus ensuring that the conductors and insulation system are protected both during transportation as well as during operation. This is particularly pertinent when the full generator undergoes thermal cycles which may then cause adjacent circumferential segments to come into contact and would otherwise cause damage to the coil assembly.

In other applications (for example in concentrated winding generators) it is not possible for constructional reasons to cut each segment in a mid-tooth, and it is therefore necessary to cut it in a mid-slot, where the coil side is exposed at the end of the segment. Additionally, the current and flux passing through the end coil halves could lead to a force away from the tooth, therefore increasing the chance of two coils from adjacent segments coming in to contact.

### Summary of the invention

Scope of the present invention is to provide a segment for a stator or rotor having circumferential ends, which are shaped in such a way that the detrimental effects above described are minimized.

This scope is met by the subject matter according to the independent claim. Advantageous embodiments of the present invention are described by the dependent claims.

According to the invention, it is provided a segment for a stator or rotor of an electrical machine. Each segment includes:
- a segment body circumferentially extending about a longitudinal axis of the segment between two circumferential ends, the segment body including:
- at least one tooth protruding according to a radial direction orthogonal to the longitudinal axis from a yoke of the segment body,
- a plurality of slots, circumferentially interposed between the teeth, the plurality of slots being circumferentially distributed between two end slots, each end slot being circumferentially comprised between a respective end tooth and a respective circumferential end,
- a coil winding arranged in the segment body, the coil winding including at least two side coil portions respectively housed in the end slots, an adhesive layer being provided between each side coil portion and a respective adjacent end tooth,
wherein each end tooth comprises an end surface, such that the adhesive layer circumferentially extends between the end surface and the respective side coil portion, the end surface comprising a plurality of surface irregularities for promoting the adherence of the adhesive layer to the end tooth.

The above described segment may be advantageously integrated in a segmented stator or rotor of an electrical machine, either generator or motor. For example, the above described segment may be advantageously integrated in the stator or rotor of an electrical generator for a wind turbine.

According to the present invention, the addition of surface irregularities permits to increase, with respect to known solutions, the area of contact with the adhesive layer at the end stator tooth. Further, the adhesive layer provides a grip effect. Consequently, the adhesive layer better provides an improved anchor effect to prevent the coil dislocation during life-time operation. This leads to an increase in generator lifetime due to the prevention of the side coil portions to move towards the segment circumferential end, thus mitigating the risk of adjacent segment end coils coming into contact. The surface irregularities are not expected to influence the performance of the electrical machine.

According to embodiments of the present invention, the adhesive layer may include a resin and/or a glue.

According to embodiments of the invention, the surface irregularities are grooves and/or protrusions and/or a combination thereof.

The end surface, on which the surface irregularities are provided, may be a side surface of the end tooth. According to embodiments of the invention, the end surface is radially oriented.

According to other embodiments of the invention, the segment comprises a plurality of teeth and at least two end teeth, each end tooth circumferentially extending between a respective end surface facing the respective circumferential end and a circumferentially opposite inner surface, the end surface having an area greater than the inner surface.

According to embodiments of the invention, the surface irregularities may have different orientation with respect to the longitudinal axis, for example the surface irregularities may be parallel or orthogonal to the longitudinal axis.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including an electrical generator with a stator geometry according to the present invention.
- Figure 2: shows a schematic partial cross section of an embodiment of an electrical generator having a stator in accordance with the present invention.
- Figure 3: shows a magnified view of details of the embodiment of figure 2.
- Figure 4: shows a schematic longitudinal section of a first embodiment of an electrical generator having a stator in accordance with the present invention.
- Figure 5: shows a schematic longitudinal section of a second embodiment of an electrical generator having a stator in accordance with the present invention.
- Figure 6: shows a schematic longitudinal section of a third embodiment of an electrical generator having a stator in accordance with the present invention.
- Figure 7: shows a schematic longitudinal section of a fourth embodiment of an electrical generator having a stator in accordance with the present invention.
- Figure 8: shows a schematic longitudinal section of a fifth embodiment of an electrical generator having a stator in accordance with the present invention.
- Figure 9: shows a schematic longitudinal section of a sixth embodiment of an electrical generator having a stator in accordance with the present invention

### Detailed Description

The illustrations in the drawings are schematic. It is noted that in different figures, similar or identical elements are provided with the same reference signs.

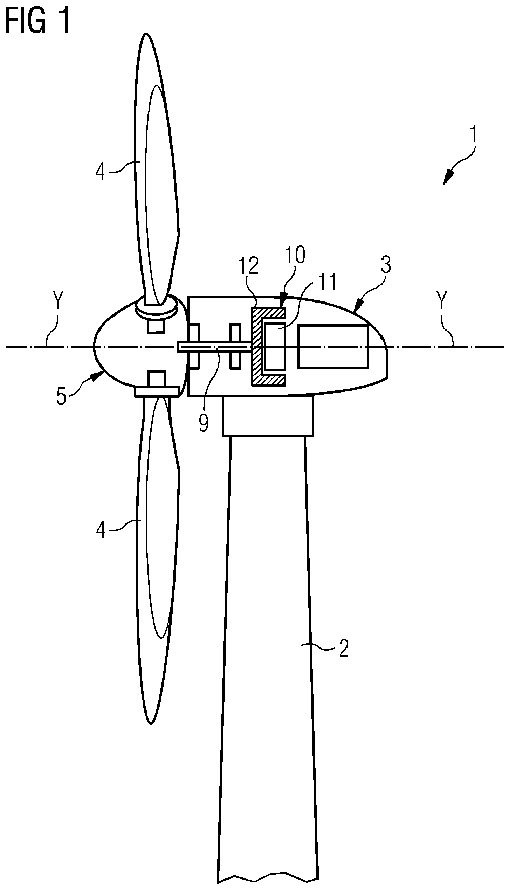

**Figure 1** shows a wind turbine 1 according to the invention. The wind turbine 1 comprises a tower 2, which is mounted on a non-depicted foundation. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a rotational axis Y. When not differently specified, the terms axial, radial and circumferential in the following are made with reference to the rotational axis Y. The rotational axis Y may coincide with stator longitudinal axis Y. The blades 4 extend radially with respect to the rotational axis Y. The wind turbine 1 comprises a concentrated winding electrical generator 10. The wind rotor 5 is rotationally coupled with the electrical generator 10 by means of a rotatable main shaft 9. According to other possible embodiments of the present invention (not represented in the attached figures), the wind rotor 5 is rotationally coupled directly with the electrical generator 10 (direct-drive generator configuration). The permanent magnet electrical generator 10 includes a stator 11 and a rotor 12. The rotor 12 is radially external to the stator 11 and is rotatable with respect to the stator 11 about the rotational axis Y. According to other embodiments of the present invention (not shown) the rotor 12 is radially internal to the stator 11.

According to other possible embodiments of the present invention (not represented in the attached figures), the present invention can be applied to any electrical generator or motor which has concentrated winding topology, for example geared drive-trains or electrical machine of the synchronous or asynchronous types.

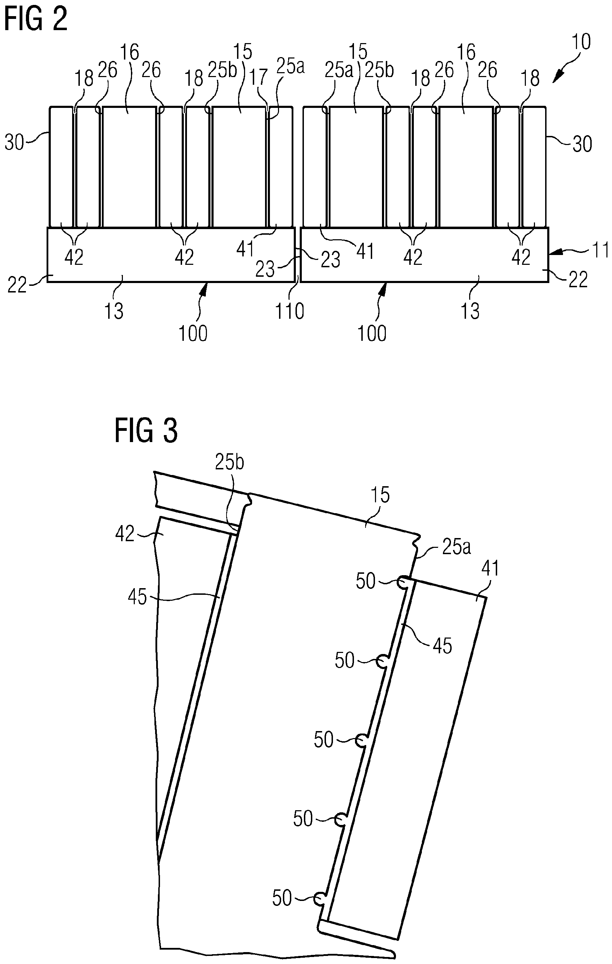

**Figures 2** and **3** show partial schematic views of a cross section, orthogonal to the longitudinal axis Y, of the electrical generator 10, where only the radially internal stator 11 is shown, the radial external rotor being not represented.

According to other possible embodiments of the present invention (not represented in the attached figures), the present invention and the description which follows may be applied to a rotor of an electrical machine.

The stator 11 includes a plurality of circumferential segments 100 (two segment 100 are shown in figure 2), which are circumferentially joined in such a way that a circumferential gap 110 is interposed between two circumferentially adjacent stator segments 100. The stator 11 has a toothed structure, as descried in the following, for housing a coil winding 30 arranged in each of the stator segments 100. Each segment 100 includes a segment body 22 circumferentially extending about the longitudinal axis Y between two circumferential ends 23. The segment body 22 includes a yoke 13, a plurality of teeth 15, 16 and a plurality of slots 17, 18.

Each tooth 15, 16 protrudes from the yoke 13 according to a radial direction orthogonal to the longitudinal axis Y. The plurality of teeth 15, 16 is circumferentially distributed between two end teeth 15 of the plurality of teeth 15, 16. Each end tooth 15 circumferentially extends between two respective side surfaces 25a, 25b. The two side surfaces 25a, 25b comprises an end surface 25a facing the circumferential end 23 and a circumferentially opposite inner surface 25b. The plurality of teeth 15, 16 comprises at least one intermediate tooth 16 (one intermediate tooth 16 for each segment 100 is shown in figure 2) circumferentially comprised between the end teeth 15. Each intermediate tooth 16 circumferentially extends between two respective side surfaces 26. The side surfaces 25a, 25b, 26 may be radially oriented.

The plurality of slots 17, 18 are circumferentially interposed between the teeth 15 and circumferentially distributed between two end slots 17. Each end slot 17 is circumferentially comprised between a respective tooth 15 and a respective circumferential end 23 of the segment body 22. The plurality of slots 17, 18 comprise a plurality of intermediate slots 18 (two intermediate slots 18 for each segment 100 are shown in figure 2) circumferentially comprised between the two end slots 17. The coil winding 30 is a double-layer winding including two side coil portions 41 respectively housed in the end slots 17 and two intermediate coil portions 42 in each of the intermediate slots 18. Each of the end coil portions 41 and of the intermediate coil portions 42 extends radially from the yoke 13 towards the radial external end of the respective slot 17, 18.

According to possible embodiments of the present invention, the coil winding 30 may by a coil concentrated double-layer or single-layer winding or a double-layer or single-layer coil distributed winding.

Each segment 100 includes an adhesive for fixing the coil winding 30 to the segment body 11. The adhesive may include a resin, which further to provide electrical protection during lifetime of the electrical generator 10. The adhesive may alternatively or additionally include a glue. The adhesive may include a plurality of adhesive layers 45, 46 between the teeth 15, 16 and the coil portions 41, 42. As shown in figure 3 for the end tooth 15, a first adhesive layer 45 circumferentially extends between the end surface 25a and a respective side coil portion 41 and a second adhesive layer 46 circumferentially extends between the inner surface 25b and a respective intermediate coil portion 42. The end surface 25a comprises a plurality of surface irregularities 50 for promoting the adherence of the first adhesive layer 45 to the end tooth 15. The adhesive cooperates with such irregularities 50 to provide an anchor to the side coil portion 41, thus preventing them from moving away from the respective end tooth 15 at the respective circumferential end 23. In the embodiment of figure 3, the surface irregularities 50 are grooves. Each groove may have a section (as shown in figure 3) in shape of a semi-closed circle. Other shapes may be also possible, including but not limited to multisided polygons. According to other embodiments the irregularities may be protrusion. According to yet other embodiments the surface irregularities 50 are both grooves and protrusion. The irregularities may be provided by conveniently controlling the roughness of the end surface 25a. In the embodiment of figure 3, the end surface 25a and the inner surface 25b of the end tooth 15 are different, the end surface 25a having a greater area than the inner surface 25b. According to the other embodiments, the inner surface 25b may comprise respective irregularities. In particular, the inner surface 25b may be identical to the end surface 25a. In embodiments where the segment 100 has only one tooth 15, the only tooth 15 circumferentially extends between two end surfaces 25a.

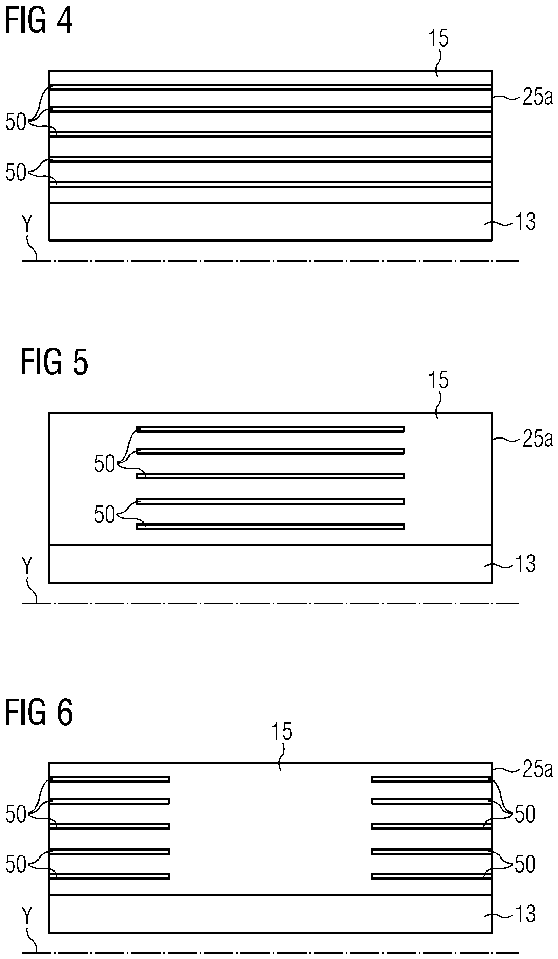

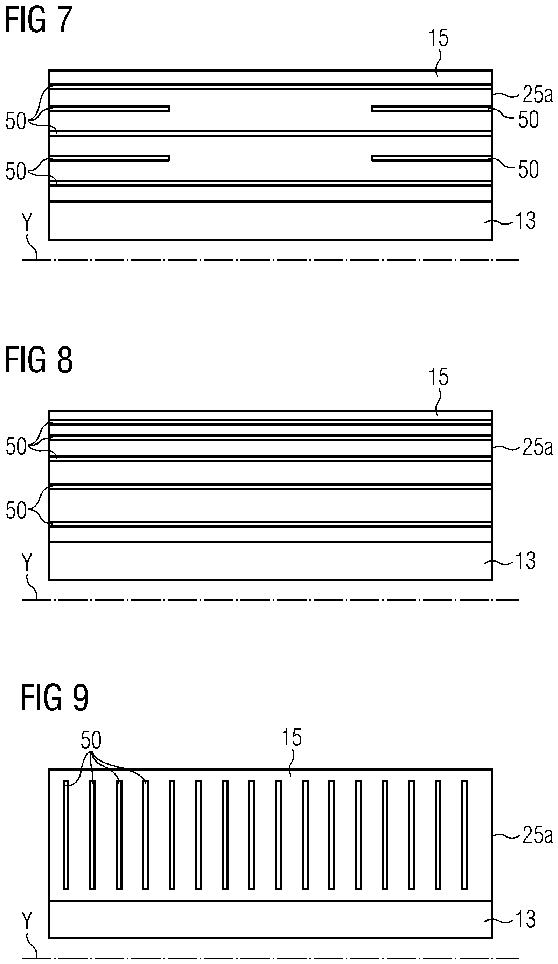

**Figures 4** to **9** respectively show schematic longitudinal views, parallel to the longitudinal axis Y, of respective embodiments of the electrical generator 10. In the embodiments of figures 4 to 9 the surface irregularities 50 are provided as grooves. According to the first embodiment (figure 4), grooves 50 are provided along the whole axial extension of the end surfaces 25a, the groves 50 being parallel to the longitudinal axis Y and regularly distanced along the radial direction. According to other embodiments (figure 5 and 6), the grooves 50 are provided only along an axial portion of the end surfaces 25a, the groves 50 being parallel to the longitudinal axis Y. For example, as shown in the second embodiment of figure 5, the grooves 50 may be provided only at an axial portion comprising the axial center of the coil portion 41, i.e. where support from the other half of the coil portion is weakest. Alternatively, as shown in the third embodiment of figure 6, the grooves 50 may be provided at the axial ends of the coil portion 41. The fourth embodiment (figure 7) is a combination of the first and third embodiments, where a first plurality of grooves 50 provided along the whole axial extension of the end surfaces 25a alternates with a second plurality of grooves 50 provided only at the axial ends of the coil portion 41. The fifth embodiment (figure 8) is a variant of the first embodiment, where the radial distance between adjacent grooves 50 is variable along the radial direction. In particular, as shown in figure 8, such radial distance may decrease along a radial direction oriented from the longitudinal axis Y. Alternatively, according to an embodiment not shown in the attached figures, such radial distance may decrease along a radial direction oriented towards the longitudinal axis Y. According to the sixth embodiment (figure 9), grooves 50 are provided parallel to the radial direction. Alternatively, according to embodiments not shown in the attached figures, the grooves 50 or other surface irregularities 50 may be inclined with respect to both the longitudinal axis Y and the radial direction. According to further embodiments not shown in the attached figures, the grooves 50 or other surface irregularities 50 may have a curved layout or be distributed according to a curved layout.

## Claims

1. A segment (100) for the stator (11) or rotor of an electrical machine (10) including:
- a segment body (22) circumferentially extending about a longitudinal axis (Y) of the segment (100) between two circumferential ends (23), the segment body (22) including:
- at least one tooth (15, 16) protruding according to a radial direction orthogonal to the longitudinal axis (Y) from a yoke (13) of the segment body (22),
- a plurality of slots (17, 18), circumferentially interposed between the teeth (15, 16), the plurality of slots (17, 18) being circumferentially distributed between two end slots (17), each end slot (17) being circumferentially comprised between a respective end tooth (15) and a respective circumferential end (23),
- a coil winding (30) arranged in the segment body (11), the coil winding (30) including at least two side coil portions (41) respectively housed in the end slots (17), an adhesive layer (45) being provided between each side coil portion (41) and a respective adjacent end tooth (15),
wherein each end tooth (15) comprises an end surface (25a), such that the adhesive layer (45) circumferentially extends between the end surface (25a) and the respective side coil portion (41), the end surface (25a) comprising a plurality of surface irregularities (50) for promoting the adherence of the adhesive layer (45) to the end tooth (15).

2. Segment (100) as claimed in claim 1, wherein the surface irregularities (50) are grooves.

3. Segment (100) as claimed in claim 1 or 2, wherein the surface irregularities (50) are protrusions.

4. Segment (100) as claimed in any of the previous claims, wherein the end surface (25a) is a side surface of the end tooth (15).

5. Segment (100) as claimed in claim 4, wherein the end surface (25a) is radially oriented.

6. Segment (100) as claimed in any of the previous claims, wherein the segment comprises a plurality of teeth (15, 16) and at least two end teeth (15), each end tooth (15) circumferentially extending between a respective end surface (25a) facing the respective circumferential end (23) and a circumferentially opposite inner surface (25b), the end surface (25a) having an area greater than the inner surface (25b).

7. Segment (100) as claimed in any of the previous claims, wherein the adhesive layer (45) includes a resin.

8. Segment (100) as claimed in any of the previous claims, wherein the surface irregularities (50) are parallel to the longitudinal axis (Y).

9. Segment (100) as claimed in any of the previous claims, wherein the surface irregularities (50) are only along an axial portion of the end surfaces (25a).

10. Segment (100) as claimed in any of the previous claims, wherein the surface irregularities (50) are orthogonal to the longitudinal axis (Y).

11. A stator (11) or rotor including a plurality of segments (100) as claimed in any of the previous claims 1 to 6.

12. Electrical machine (10) including a stator (11) or rotor as claimed in claim 7.

13. Wind turbine (1) including an electrical machine (10) as claimed in claim 8, the electrical machine (10) being an electrical generator.
